(19) Europäisches Patentamt
European Patent Office
Office européen des brevets

(11) **EP 3 401 274 B1**

(12) **EUROPEAN PATENT SPECIFICATION**

(45) Date of publication and mention
of the grant of the patent:
**18.11.2020 Bulletin 2020/47**

(51) Int Cl.:
***C01B 13/11*** ^(2006.01)

(21) Application number: **16883563.5**

(86) International application number:
**PCT/JP2016/050061**

(22) Date of filing: **05.01.2016**

(87) International publication number:
**WO 2017/119058 (13.07.2017 Gazette 2017/28)**

(54) **OZONE GENERATOR**

OZONGENERATOR

GÉNÉRATEUR D'OZONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.11.2018 Bulletin 2018/46**

(73) Proprietor: **Mitsubishi Electric Corporation Chiyoda-ku Tokyo 100-8310 (JP)**

(72) Inventors:
• **NAGAYAMA Takahisa Tokyo 100-8310 (JP)**
• **HIRANABE Naoki Tokyo 100-8310 (JP)**
• **ODAI Yoshiaki Tokyo 100-8310 (JP)**
• **NAKATANI Hajime Tokyo 100-8310 (JP)**

(74) Representative: **Witte, Weller & Partner Patentanwälte mbB Postfach 10 54 62 70047 Stuttgart (DE)**

(56) References cited:
**FR-A1- 2 424 874      JP-A- H1 143 311**
**JP-A- H04 214 003    JP-A- 2000 203 808**
**JP-A- 2008 013 404   JP-A- 2013 252 985**
**US-A- 5 254 317**

## Description

Technical field

The present invention relates to ozone generators configured to generate ozone from a source gas containing oxygen by means of silent discharge.

Background Art

Conventionally, most of ozone generators used such as in water treatment utilize silent discharge. The ozone generator utilizing silent discharge are basically configured such that a cylindrical dielectric tube whose inner surface is coated with a metal film is inserted inside a cylindrical metal tube with a predetermined gap between the inner wall of the metal tube and the outer wall of the dielectric tube. An oxygen containing source gas such as air or oxygen gas is flowed through the gap and a high AC voltage is applied across the metal tube and the metal film on the inner surface of the dielectric tube to generate an AC electric field in the gap via the dielectric of the dielectric tube; then the source gas discharges and the oxygen in the source gas is ozonized, whereby ozone is generated.

An ozone generator used particularly in treating a large amount of water requires increase in the amount of treatment without making the ozone generator bigger, as increasing treatment amount in recent year. Establishing a predetermined uniform gap between the metal-tube inner wall and the dielectric-tube outer wall can increase the ozone generation efficiency; hence, various contrivances have been applied to a spacer for establishing the uniform gap. For example, the following spacers have been proposed:

> (a) a spacer formed by bending a metal plate (Patent Document 1);
> (b) a spacer formed of a metal plate having protrusions (Patent Document 2);
> (c) a spacer inserted into both ends of the dielectric tube (Patent Document 3); and a tape spacer adhered around the dielectric tube (Patent Document 4).

Furthermore, there is disclosed a spacer configuration in which at least three metal-plate spring members are fixedly disposed around the dielectric tube by a resin tape or adhesive (Patent Document 5).

Prior Art Documents

Patent Documents

> Patent Document 1: JP2000-203808 A,
> Patent Document 2: JP2008-013404 A,
> Patent Document 3: JP2005-179102 A,
> Patent Document 4: JP2013-252985 A, and
> Patent Document 5: JP H04-214003 A.

Further, documents FR 2 424 874 A1 shows spacing inner and outer concentric ozoniser tubes using spacer in form of springy strip with projecting tabs, bent in arc around space between tubes. The strip rests on the surface of one of the tubes and the free ends of the tabs rest on the surface of the other tube. Pref. the tabs are arranged so that their free ends are at a distance from the strip slightly greater than the width of the discharge space so that the springiness in the tabs holds them firmly in contact with the tube. The tabs are pref. formed by pressing or cutting out of the strip, and can turn inwardly or outwardly of the arc.

Document US 5 254 317 A shows a device for generating ozone. In an ozone generator, spring elements of metal pointing transversely to the longitudinal direction of the tube are provided for spacing the dielectric from the metallic outer electrode. These spring elements are either bonded directly to the dielectric and are stuck onto a tape-shaped carrier which is attached to the dielectric and at their free ends rest against the inside wall of the outer electrode. In this manner, the discharge gap is only minimally constricted and the assembly of the inner tubes is simplified.

Document JP H11 43311 A shows a spacer apparatus for an ozone generator. This spacer for ozone generator is attached to the protruded side of a discharge tube and contains an arc part having radium of curvature larger than outer periphery of a discharge tube and a linear part which is contact bonded to the outer periphery of the discharge tube and circularly formed and is a part provided with a spring material providing a curved part which is contact bonded to the inner surface of a grounding tube on the external surface of the linear part. Four projections are provided in the part and these projections support own weight of the discharge tube and form a prescribed discharge space.

Summary of the invention

Problem that the Invention is to Solve

To perform spacer capability, the spacer is desirably required to have the following properties and functions:

> (1) Because the gap between the dielectric tube and the metal tube varies within a dimensional tolerance of the dielectric tube, the spacer needs to have a certain level of elasticity to accommodate the variation and to keep the gap at a proper value;
> (2) The spacer establishes the gap between the dielectric tube and the metal tube to flow a sufficiently amount of the source gas therethrough even when the spacer is mounted around the dielectric tube;

(3) The spacer is easy to be mounted or inserted around the dielectric tube, and also makes it easy for the dielectric tube to be inserted inside the metal tube and does not move during the insertion of the dielectric tube; and

(4) The spacer needs to be formed of ozone-resistance material, preferably glass fiber or fluoropolymer when using insulating material, otherwise stainless steel or other metal when using conductive material (metal).

Conventional spacers pose the following problems in satisfying the above requirements.

A spacer formed into a plate spring by bending a metal plate as disclosed in Patent Document 1 cannot have a sufficient elasticity because work hardening occurs when the metal plate is bended and the bended portion thereby increases in stiffness. A spacer formed to have protrusions on a metal plate as disclosed in Patent Document 2 also cannot have a sufficient elasticity because similar work hardening occurs. A spacer configured to be tucked into both ends of the dielectric tube as disclosed in Patent Document 3 is effective for a short dielectric tube but is difficult to keep properly the middle portion of the gap for a long dielectric tube. A spacer formed of tape adhering around the dielectric tube as disclosed in Patent Document 4 cannot exhibit a sufficient elasticity because it accommodates dimensional tolerance of the dielectric tube only by the elasticity in the thickness direction of the tape. The spacer disclosed in Patent Document 5, while it has elasticity, is difficult to be retained in position during insertion the dielectric tube, or a material having a trouble with ozone resistance is used.

The present invention is made to overcome the problems as described above and aimed at providing an ozone generator that uses a spacer having a sufficient elasticity with no work hardening and makes it easy for the dielectric tube to insert.

Means for Solving the Problem

The ozone generator according to the present invention is configured with a circular cross-section metal ground electrode tube and a circular cross-section dielectric tube provided with a metal electrode inside the dielectric tube and held inside the ground electrode tube by a plurality of spacers so that a gap is established between the outer wall of the dielectric tube and the inner wall of the ground electrode tube, to generate ozone by flowing a source gas through the gap and by applying an alternating voltage so that the ground electrode tube has the ground potential and the metal electrode inside the dielectric tube has a high potential, and by discharging the source gas flowing through the gap, wherein the plurality of spaces are disposed at intervals in the axial direction of the dielectric tube, and each of the plurality of disposed spacers is made up of a metal base portion wound around the outer circumference of the dielectric tube and of a plurality of metal plate spring portions each having a thickness thicker than the base portion and fixed to the base portion, and both ends in the circumferential direction of the dielectric tube, of each of the plurality of plate spring portions are in contact with the inner wall of the ground electrode tube. Each of the plate spring portions has a portion whose width in the circumferential direction of the dielectric tube increases continuously to a maximum circumferential width from at least one end in the axial direction of the dielectric tube.

Advantage Effect of the Invention

According to the present invention, since an ozone-generator spacer is made up of plate springs that are subject to no bending nor deformation in the manufacturing process, no work hardening occurs in the plate and a proper elasticity is retained after insertion of the dielectric tube, thereby being able to provide an ozone generator that facilitates insertion of the dielectric tube.

Brief Description of the Drawings

FIG. 1 is a cross-sectional view showing a configuration of the main portion of an ozone generator according to Embodiment 1 of the present invention;
FIG. 2 is a schematic cross-sectional side view of the ozone generator of the present invention;
FIG. 3 is a cross-sectional view showing a configuration of a spacer for the ozone generator, according to Embodiment 1 of the present invention;
FIGS. 4A and 4B are development views showing the configuration of the spacer for the ozone generator, according to Embodiment 1 of the present invention;
FIG. 5 is an enlarged cross-sectional side view of the main portion of the ozone generator when a dielectric tube mounted with the spacer according to Embodiment 1 of the present invention is inserted inside a ground electrode tube;
FIG. 6 is a cross-sectional view taken along B-B line in FIG. 5, of the ozone generator when the dielectric tube mounted with the spacer according to Embodiment 1 of the present invention is inserted inside a ground electrode tube;
FIG. 7 is a development view showing another configuration of the spacer for the ozone generator, according to Embodiment 1 of the present invention;
FIG. 8 is a development view showing still another configuration of the spacer for the ozone generator, according to Embodiment 1 of the present invention;
FIG. 9 is a cross-sectional view showing a configuration of the main portion of an ozone generator according to Embodiment 2 of the present invention;
FIG. 10 is a cross-sectional view showing the configuration of a spacer for the ozone generator, according to Embodiment 2 of the present invention;
FIGS. 11A and 11B are development views showing the configuration of the spacer for the ozone generator, according to Embodiment 2 of the present invention;
FIG. 12 is a development view showing a configuration of a spacer for the ozone generator, according to Embodiment 3 of the present invention;
FIG. 13 is a development view showing a configuration of a spacer for the ozone generator, according to Embodiment 4 of the present invention;
FIG. 14 is a development view showing a configuration of a spacer for the ozone generator, according to Embodiment 5 of the present invention;
FIG. 15 is a development view showing a configuration of a spacer for the ozone generator, according to Embodiment 6 of the present invention;
FIG. 16 is a cross-sectional view showing the configuration of the spacer for the ozone-generator, according to Embodiment 6 of the present invention;
FIG. 17 is a development view showing another configuration of the spacer for the ozone generator, according to Embodiment 6 of the present invention;
FIG. 18 is a development view showing a configuration of a spacer for the ozone-generator spacer, according to Embodiment 7 of the present invention;
FIG. 19 is an enlarged view showing a configuration of a slit portion of the spacer for the ozone generator, according to Embodiment 7 of the present invention; and
FIG. 20 is a development view showing a configuration of a spacer for the ozone generator, according to Embodiment 8 of the present invention.

Embodiments for Carrying Out the Invention

Embodiment 1

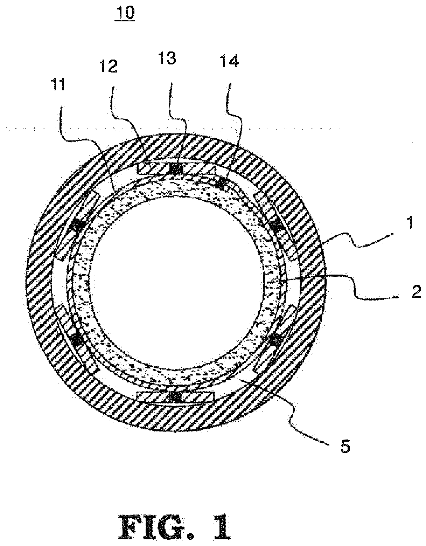

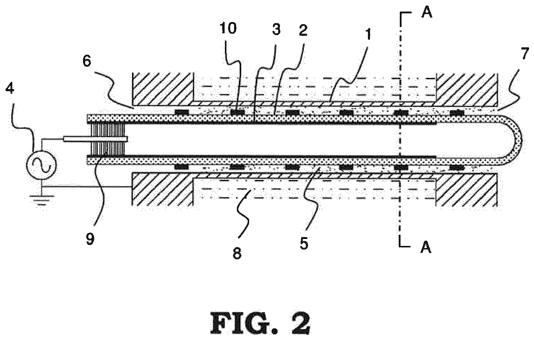

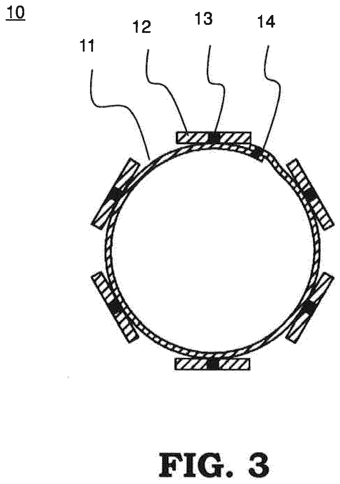

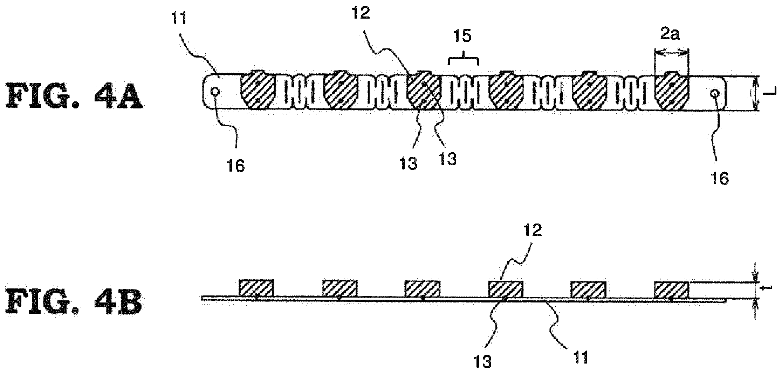

An ozone generator according to Embodiment 1 of the present invention is described hereinafter with reference to FIGS. 1 to 4. FIG. 2 is a cross-sectional side view schematically showing a configuration common to the ozone generator according to each embodiment of the present invention. FIG. 1 is a cross-sectional view taken along *A-A* line in FIG. 2, showing the configuration of the main portion of the ozone generator according to Embodiment 1 of the present invention. FIG. 3 is a cross-sectional view of the configuration of a spacer for the ozone generator, according to Embodiment 1 of the present invention. FIGS. 4A and 4B are a plan development view and a cross-sectional side development view showing the configuration of the spacer for the ozone generator, according to Embodiment 1 of the present invention.

First of all, the outline of the ozone generator which the present invention is applied to is described with reference to FIG. 2. An circular cross-section dielectric tube 2 coated on its inner surface with a conductive film 3, which serves as a metal electrode, is inserted inside a ground electrode tube 1, which is an circular cross-section metal tube, with a predetermined gap being established by spacers 10. A source gas containing oxygen such as an oxygen gas or the air is flowed through the gap from a gas inlet 6 toward a gas outlet 7. Applying a high frequency AC voltage to the conductive film 3 from a high voltage, high frequency power source 4 via a contact 9 generates discharge in the gap between the dielectric tube 2 and the ground electrode tube 1. Namely, the gap serves as a discharge space 5. A dielectric such as a glass tube or a ceramic tube can be used as the dielectric tube 2. The explanation is made hereinafter according to an example of using a glass tube as the dielectric tube 2. As the metal electrode, an electrical conductor may be used that is provided inside the dielectric tube 2, such as a metal rod inserted inside the dielectric tube 2, other than the conductive film 3 coated on the inner surface of the dielectric tube 2.

Next, the operation of the ozone generator is described. Applying a high frequency AC voltage across the conductive film 3 on the inner surface of the glass tube 2 and the ground electrode tube 1 generates a high electric filed in the discharge space 5, whereby the gas in the discharge space 5 becomes plasma. When the source gas is introduced into the discharge space from the gas inlet 6, oxygen in the source gas is ozonized in the plasma and the source gas becomes a gas containing high concentration ozone at the gas outlet 7. If there is a large variation in the discharge gap distance, which is the distance of the gap forming the discharge space 5, the discharge is concentrated locally and results in reduction in ozonizing efficiency. To suppress the variation in the discharge gap distance, the spacers 10 are disposed between the glass tube 2 and the ground electrode tube 1, to keep the gap uniform.

The spacer 10 is described in detail with reference to FIGS. 1 to 4. As shown in FIG. 3, the spacer 10 is made up of a base plate constituting a base portion 11 and of plate spring portions constituting plate spring members 12, and the plate spring members are joined to the base plate by, for example, spot welding, laser welding, or the like at plate spring member welding spots 13. Note that in Embodiments of the present application, the base plate portion and the base plate are designated at the reference numeral of 11 because both indicate the same component and the plate spring portions and the plate spring members are designated at the reference numeral of 12 because both indicate the same components. The base plate 11 is formed annular by joining its both ends by, for example, spot welding or the like at a base plate welding spot 14. As shown in the development view of FIG. 4A, the base plate 11 has pluralities of slits extended in the axial direction of the glass tube 2 in slit areas 15 between adjacent plate spring members 12 and has positioning pin holes 16 formed near both ends of the base plate. The spacer in Embodiment 1 is made up of the base plate 11 made of stainless steel and the six plate spring members 12 made of stainless steel, and each plate spring member 12 is welded only at the middle thereof to the ring-shaped base plate 11, as shown in FIGS. 3, 4A and 4B. Consequently, the plate spring member 12 is flat under a force-free condition, as shown in FIGS. 4A and 4B. The plate spring member 12 is subject to no processing, such as bending, except for the plate spring member welding spots 13 in the manufacturing process and the thickness of the plate spring member can be freely set. This allows a high degree of flexibility in the spring constant and a necessary pushing force to be generated.

When the glass tube 2 are inserted inside the ground electrode tube 1 after the spacers 10 are fittingly mounted around the glass tube, both ends in the circumferential direction of the glass tube 2, of each plate spring member 12 are brought into contact with the inner wall of the ground electrode tube 1 and the plate spring members 12 are bended in the gap between the ground electrode tube 1 and the glass tube 2, as shown in the cross sectional view of FIG. 1, whereby the plate spring members generate forces to push the glass tube 2 back to the center axis of the ground electrode tube 1. Because of the forces, disposing in the gap between the ground electrode tube 1 and the glass tube 2 a plurality of the spacers 10 at intervals in the axial direction of the glass tube 2 as shown in FIG. 2 allows the glass tube 2 to be placed over its entire length substantially at the center of the ground electrode tube 1 and the gap to be uniform, thus being able to increase the ozone generation efficiency.

The base plate 11 of the spacer 10 needs to be fixed around the glass tube 2 when the glass tube is inserted inside the ground electrode tube 1. In Embodiment 1, the strip-shaped base plate 11 shown in FIGS. 4A and 4B is formed beforehand into a ring shape as shown in FIG. 3 by being joined at its both ends with spot welding, laser welding, or other welding. Furthermore, the base plate 11 has slit portions 15 in each of which a plurality of slits are extended as shown in FIG. 4A and is welded into a ring shape to have a diameter adjusted slightly smaller than the outer diameter of the glass tube 2. Hence, expansion of the slit portions 15 at insertion of the glass tube 2 into the ground electrode tube 1 acts as a spring and thereby allows a circumferential tensile force to be generated. This tensile force brings the base plate 11 of the spacer 10 into tight contact around the glass tube 2 even when there is a variation in the diameter of the glass tube 2. Since the initial circumferential length of the ring is important for the base plate 11 to be in tight contact around the glass tube 2, the circumferential length is carefully adjusted by inserting a pin into the positioning pin holes 16 opened near end portions of the base plate to form the ring. With this configuration, the spacers 10 can be mounted easily at desirable positions around the glass tube 2, thus reducing the mounting time and thereby reducing the mounting cost.

The spacer 10 further needs to have a function of not preventing as much as possible the flow of the source gas through the gap 5 as well as the function of keeping the distance of the gap 5, i.e., the discharge gap distance. Lowering in flow rate of the gas entails increase in the pressure difference $\Delta P$ required for feeding a necessary flow rate $Q$. Accordingly, the wall thickness required for the pressure vessel of the ozone generator needs to be increased, thus leading to rise in cost. Moreover, feeding pressure of the source gas also needs to be increased, which leads to the necessity for a feeding device having a high capability of feeding the source gas. The pressure difference $\Delta Ps$ produced between both ends in the axial direction of the spacer 10 depends on the space factor $A$ of the spacer 10 in the gap between the glass tube 2 and the ground electrode tube 1 and the length $L$ (see FIG. 4A) of the spacer in the direction of the tube axis. In order to reduce the pressure difference, the thickness of the base plate 11 of the spacer 10 is desirably set equal to or thinner than a quarter of the gap distance.

Repulsive force $F$ due to bending of the plate spring member generally obeys the following formula for plate-spring force:

$$F = (E * L * t^3 / a^3) * \delta ,$$

where E is the Yung modulus of the plate spring member 12; L, the length the plate spring member 12 in the direction of the tube axis; t, the thickness of the plate spring member 12 as shown in FIG. 4B; a, the half width of the plate spring member 12 in the circumferential direction of the glass tube 2; and $\delta$, the amount of bending of the plate spring member 12.

As expressed by the formula, the repulsive force is proportional to the length L of the plate spring member 12 and to the cube of the thickness t of the plate spring member 12. Accordingly, even though the spacer is made shorter in its length L in the direction of the tube axis to reduce the pressure difference $\Delta Ps$, an appropriate pushing force can be obtained by increasing the thickness t of the plate spring member 12. Since the thicknesses of the base plate 11 and the plate spring member 12 of the spacer 10 according to the present invention can be set freely, the spacer can be formed to have the base plate 11 that is made thin to allow for reducing the pressure difference $\Delta Ps$ and to have the plate spring members 12 that are made thicker than the base plate 11 to allow for correcting the position of the glass tube 2 by utilizing a sufficient repulsive force generated by the plate spring members. Thus, making the plate spring member 12 thicker than the base plate 11 allows the spring force to be strengthened and the discharge gap distance to be kept uniform as well as the pressure difference $\Delta Ps$ to be reduced, thereby being able to improve the ozone generation efficiency.

The plate spring member 12 of Embodiment 1 has not a rectangular shape but a modified hexagonal shape having cut-off (chamfered) corners on one side in the axial direction of the tube. This shape is for generating the pushing force against the glass tube 2 because mounting the spacer 10 for the forefront, i.e., the cut-off one-side corners of each plate spring member 12 to face toward the insertion direction of the glass tube 2 allows the plate spring members 12 to be smoothly bent when the glass tube 2 is inserted.

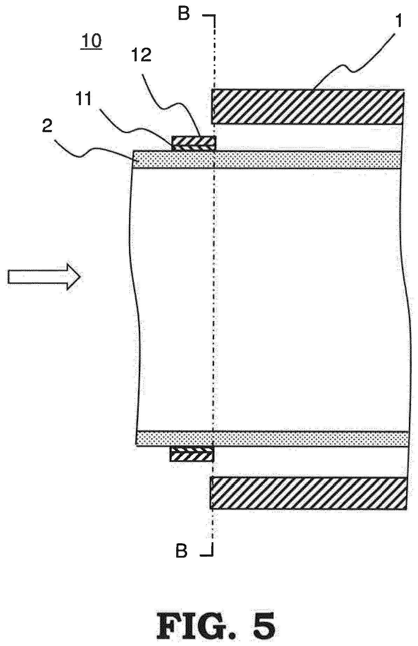

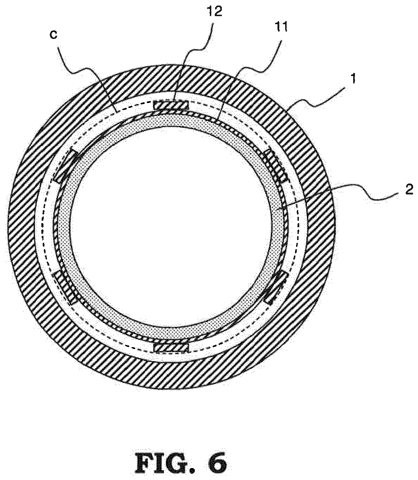

FIG. 5 shows a cross-sectional side view when a portion of the glass tube 2 where the spacer 10 is mounted is inserted inside the ground electrode tube 1, and FIG. 6 shows the cross-sectional view taken along *B-B* line in FIG. 5. The circumferential width of the plate spring member 12 continuously increases to the maximum width from the insertion-side end. This facilitates the insertion of the portion of the glass tube mounted with the spacer 10, because the outer diameter of the circle *c* (indicated by the broken line in FIG. 6) connecting the ends of the plate spring members 12 is smaller than the inner diameter of the ground electrode tube 1. As the glass tube is inserted, both ends in the circumferential direction of the glass tube 2, of each plate spring member 12 are put into contact with the inner wall of the ground electrode tube 1, whereby the plate spring members 12 become bent. This eliminates the necessity for inserting the spacer 10, with the plate spring members 12 being bent separately. Accordingly, the number of assembly steps can be reduced because time and effort for the insertion can be saved, thus bringing about a cost reduction effect. The same effect is also brought about by chamfering not only one-side corners but also both-side corners. Further, not chamfering the corners but rounding the corners into an arc shape also brings about the same effect. The plate spring member 12 may be formed into any shape as long as the circumferential width of at least one end in the axial direction of the glass tube 2, i.e., the insertion-side end is smaller than the maximum width (for example, the width 2a shown in FIG. 4A) and the circumferential width of the shape continuously increases to the maximum width from the one end. In addition, a small protrusion show in FIG. 4A formed on the plate spring member 12 at its upper side, which is opposite to the chamfered side, is a remnant called a bridge for holding the member during etching and exerts no influence on the effects.

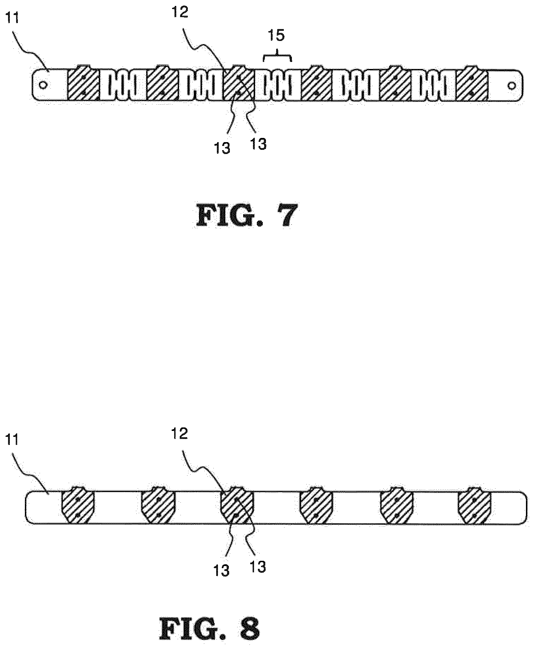

FIG. 7 is a development view showing another configuration of the spacer for the ozone generator, according to Embodiment 1 of the present invention. The plate spring member 12 of the spacer shown in FIG. 7 is formed rectangular and has a constant width in the circumferential direction of the glass tube 2. The spacer shown in FIG. 4 having the plate spring members chamfered into the modified hexagonal shape, although it facilitates insertion of the glass tube, poses a problem of weakening the spring force because the area for the plate spring reduces by the chamfered area. As for the spacer shown in FIG. 7, the plate spring member 12 does not reduce in its area because it has the constant width in the circumferential direction of the glass tube 2, thus bringing about the effect of not weakening the spring force. In addition, while the spacer shown in FIG. 4 allows the dielectric tube 2 mounted therewith to be inserted inside the ground electrode tube 1 without using a jig, the spacer shown in FIG. 7 needs to prepare the jig for facilitating the insertion.

FIG. 8 is a development view showing still another configuration of the spacer for the ozone generator, according to Embodiment 1 of the present invention. The spacer shown in FIG. 8 is not inserted onto the glass tube 2 after formed in advance into a ring shape but is mounted around the glass tube 2 at a predetermined position thereof by directly winding and bonding the base plate 11 around the glass tube 2. This eliminates the need for forming the portions, such as the slit portions 15 provided for the spacer shown in FIG. 4, for generating the spring force in the circumferential direction. Moreover, the spacer is not formed in advance into the ring shape by joining the both ends of the base plate 11 with spot welding or the like, thus bringing about an effect of being able to manufacture the spacer at low cost.

The spacer according to not only Embodiment 1 but also including the other embodiments of the present invention is applicable to any discharge gap distance. However, while various configurations of the spacer can be applied to a wide discharge gap distance of, for example, about 0.6 mm or wider, a configuration of the spacer that generates a large spring force in a narrow space is difficult to be formed for a short gap distance of, for example, 0.3 mm or narrower. The spacers for the ozone generator, according to the other embodiments as well as Embodiment 1 of the present application are effective particularly for a short gap of 0.3 mm or narrower.

While Embodiment 1 describes the case of the number of plate spring members 12 being six, three or more to about ten or less can bring about a similar effect. However, in a case of a small number of the plate spring members, such as three or four, the design of the plate spring member becomes difficult because the spring force required per plate spring member becomes large. Contrarily, in a case of the number thereof being eight or more, the manufacturing steps considerably increase. Hence, the number of plate spring members is preferably five to seven. More preferably, six is most suitable. While FIG. 2 shows the case of disposing six of the spacers 10 per glass tube, disposing three to ten of the spacers 10 are sufficient depending on the length of the glass tube 2.

Embodiment 2

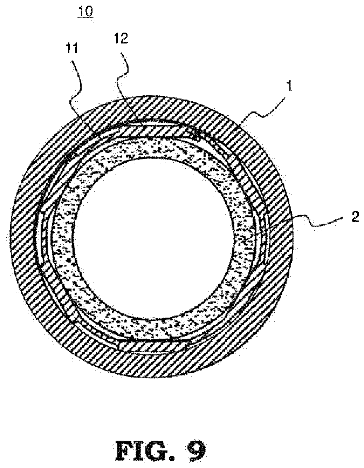

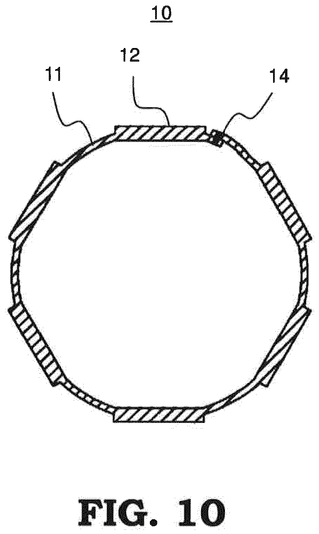

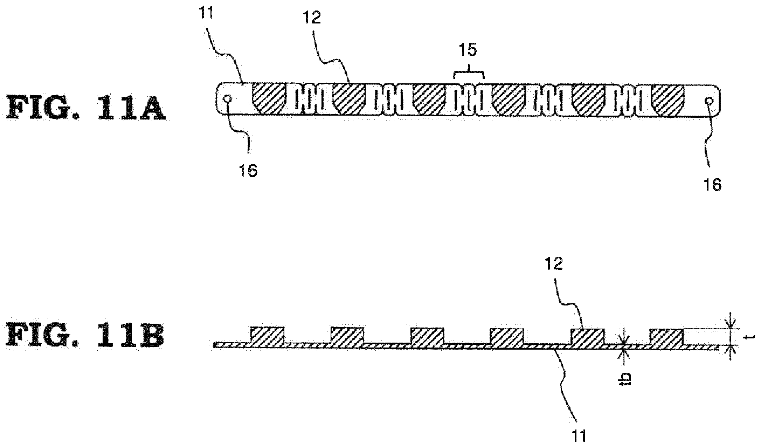

FIG. 9 to FIGS. 11A and 11B are views showing a configuration of a spacer for the ozone generator, according to Embodiment 2 of the present invention. FIG. 9 is a cross-sectional view of the ozone generator according to Embodiment 2 of the present invention, taken along A-A line shown in FIG. 2. FIG. 10 is a schematic cross-sectional view showing the detail of the spacer according to Embodiment 2, and FIG. 11A is a plan development view of the spacer and FIG. 11B is a cross-sectional side development view thereof. The spacer according to Embodiment 2 has a base portion 11 and plate spring portions 12 both formed by a two-step etching process of one metal workpiece, for example, a stainless plate. Here, a portion having a thickness $t_b$ throughout the spacer, including portions having the thickness $t_b$ at the plate spring portions 12, is referred to as the base portion 11. This configuration of the spacer obviates the need for the step of welding the plate spring members to the base plate, while the spacer of Embodiment 1 needs the welding step, and simplifies the assembly of the spacer, thus bringing about a cost reduction effect. Note that forming the plate spring portion too thick in a case of the discharge gap being narrow will make it difficult to insert the dielectric tube 2 inside the ground electrode tube 1, in other words, there is a limitation on the thickness of the plate spring portion. In Embodiment 2, the spring force of the spacer is generated not by the thickness $t$ alone, which is corresponding to the thickness of the plate spring member of Embodiment 1, but by the thickness $t$ plus the thickness $t_b$ of the base portion 11. Consequently, in a case of the total thickness of the base portion and the plate spring portion being the same as that in Embodiment 1, the spring force can be more increased than with Embodiment 1, thus bringing about a further effect of being able to improve the force correcting eccentricity of the dielectric tube 2.

As with Embodiment 1, the spacer according to Embodiment 2 also has pluralities of slits extended in the slit portions 15 and is welded into a ring shape to have a diameter adjusted slightly smaller than the outer diameter of the glass tube 2. Hence, expansion of the slits at insertion of the glass tube 2 acts as a spring and thereby allows a circumferential tensile force to be generated. By the tensile force, the spacer is brought into tight contact around the glass tube 2 even though the glass tube 2 has a variation in its outer diameter.

Further, the plate spring portion 12 is formed into a shape that has chamfered or rounded corners and whose circumferential width continuously increases to the maximum circumferential width from at least one end in the axial direction of the glass tube 2, as described in Embodiment 1. This allows the work of inserting the glass tube 2 inside the ground electrode tube 1 to be smoothly performed. In addition, the thickness of the base plate 11 is desirably set equal to or thinner than a quarter of the gap distance, as with Embodiment 1.

Embodiment 3

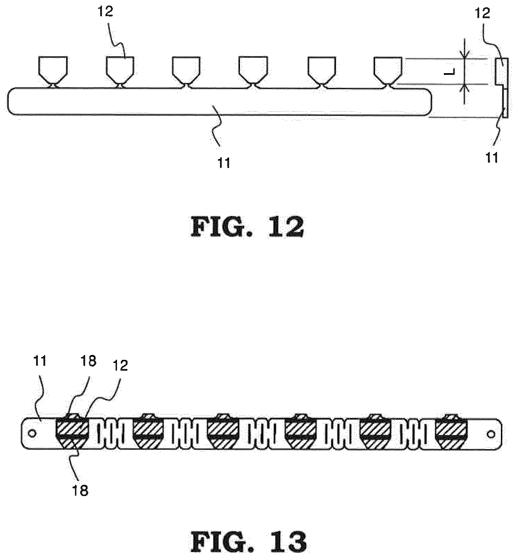

FIG. 12 is a development view showing a configuration of a spacer for the ozone generator, according to Embodiment 3 of the present invention. In FIG. 12, the view on the left side is the plan view and the view on the right side is the side view seen from the right. The spacer according to Embodiment 3 is formed by performing an etching that partially varying the thickness of one metal workpiece, for example, a stainless plate to have the base portion 11 and the plate spring portions 12 thicker than the base portion 11, as with Embodiment 2. Specifically, the base portion 11 can be easily formed by reducing the thickness using half etching performed under control of the etching time and the etching solution temperature. In Embodiment 3, the plate spring portions 12 are formed protruding from the base portion 11. Thus, when the spacer is mounted around the glass tube 2, the plate spring portions 12 are disposed protruding in the axial direction of the glass tube 2 from the base portion 11. The base portion 11 is bonded around the dielectric tube 2 with glue, double-sided adhesive tape, or other adhesive agent. Attaching double-sided adhesive tape to the reduced thickness surface of the base portion 11 enables the dielectric tube 2 to be easily inserted inside the ground electrode tube 1 because the opposite surface, i.e., the outer surface of the spacer has no steps between the base portion and the plate spring portions.

The spacer according to Embodiment 3 also exhibits the same effect as the spacer according to Embodiment 2. To be more specifically, since the entire thickness of the spacer can be utilized for the plate spring, the spacer can generate the maximum spring force compared to the spacer of Embodiment 2 having the same thickness for a case of the gap being narrow, which case imposes severe restriction on the thickness of the spacer, thus bringing about the further effect of being able to improve the force correcting eccentricity of the dielectric tube 2. Moreover, the base portion 11 can be put into tighter contact around the dielectric tube 2 compared with Embodiment 2, thus also bringing about an effect of making it difficult for the spacer to move.

While only the plate spring portions 12 having a substantially hexagonal shape are thicker than the base portion 11 as shown FIG. 12, each of the portions (narrow portions) connecting the plate spring portions with the base portion may be formed to have the same thickness as the plate spring portions 12, in other words, steps may be formed in line with the upper side of the base portion. In addition, the connection portion may be formed to have a step near the middle thereof or may be formed to have not a sharp step but a thickness varying gradually. In essence, various detail forms may be employed for the connection portions as long as the plate spring portions 12 is thick and base portion 11 is thin.

Further, the plate spring portion 12 is formed into a shape that has chamfered or rounded corners and whose circumferential width continuously increases to the maximum circumferential width from at least one end in the axial direction of the glass tube 2, as described in Embodiment 1. This allows the work of inserting the glass tube 2 inside the ground electrode tube 1 to be smoothly performed. In addition, the thickness of the base plate 11 is desirably set equal to or thinner than a quarter of the gap distance, as with Embodiment 1.

While Embodiment 3 describes the example in which the base portion 11 is bonded around the dielectric tube 2 with glue, double-sided adhesive tape, or other adhesive agent as with the spacer shown in FIG. 8, it goes without saying that the slits may be extended in the base portion 11 and be formed in advance into a ring shape, as described in Embodiment 1 and Embodiment 2.

Embodiment 4

FIG. 13 is a development view showing a configuration of a spacer for the ozone generator, according to Embodiment 4 of the present invention. The spacer according to Embodiment 4 is formed by joining the plate spring members 12 to the base plate 11 by welding as with Embodiment 1. Note that, they are joined by circumferential line welding at weld portions 18. In Embodiment 4, different from Embodiment 1 in which the plate spring members 12 are point-fixed to the base plate 11 by spot welding, the spring force of the spacer can be produced by the thickness of the plate spring member plus that of the base plate, as with the spacer of Embodiment 2 in which the base portion 11 and the plate spring portions 12 are formed of one metal plate. This allows the spacer to be formed thinner, thus being able to improve passage of the source gas flow.

The configuration, which is formed of the two plates by joining and is able to generate the spring force of spacer by the thickness of the base plate plus that of the plate spring member, can be also achieved not only by the line welding shown in FIG. 13 but also by welding of or bonding of the whole plate spring member 12 to the base plate 11.

Embodiment 5

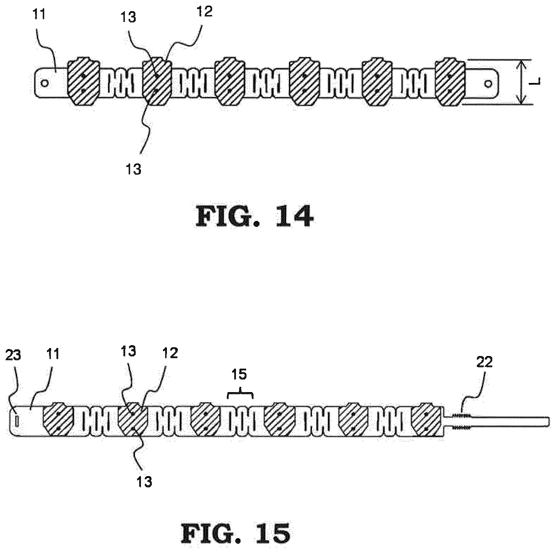

FIG. 14 is a development view showing a configuration of a spacer for the ozone generator, according to Embodiment 5 of the present invention. The spring force of the spacer according to Embodiment 5 is adjusted by varying not the thickness of the plate spring member 12 but its length $L$ in the axial direction of the glass tube 2. In a case of the discharge gap being narrow, since the thickness of the plate spring member is restricted, there is a limitation to the spring force of the plate spring member. Further, increasing the width of the base plate in the direction of the tube axis poses the disadvantage of decreasing the discharge area. Embodiment 5 brings about a significant effect of increasing the spring force of the plate spring member 12 without increasing the width of the base portion 11 nor increasing the thickness of the plate spring member. Since a metal plate having a standard-compliant thickness is only available, the thickness of the plate spring member cannot be freely changed; hence, the spring force cannot be continuously varied by changing the thickness in the case of adjusting the spring force. However, varying the length $L$ of the plate spring members 12 allows the spring force to be varied continuously, thus being able to adjust the spring force accurately. Also in Embodiment 2 and Embodiment 3, i.e., in FIGS 11A, 11B and FIG. 12, it goes without saying that increasing the length of the plate spring portion 12 in the axial direction of the glass tube 2 brings about the same effect.

Embodiment 6

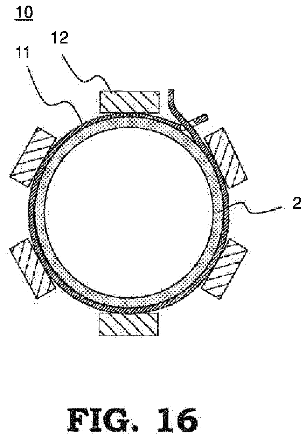

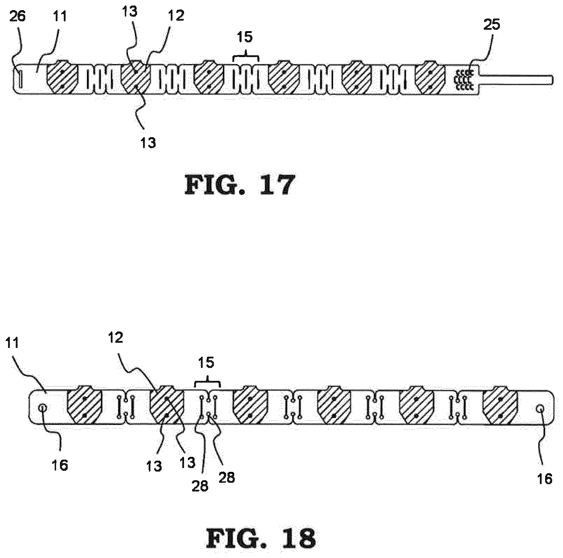

FIG. 15 is a development view showing a configuration of a spacer for the ozone generator, according to Embodiment 6 of the present invention. The spacer shown in FIG. 15 has a notch portion 22 and an engaging slit 23 for engaging the notch portion 22, to fixedly wind the base plate 11 around the glass tube 2. FIG. 16 is a cross-sectional view showing the assembled state of the spacer 10 being wound around the glass tube 2. Further, FIG. 17 is a development view showing another configuration of the spacer for the ozone generator, according to Embodiment 6 of the present invention. The spacer shown in FIG. 17 has a hook portion 25 and a hook engaging slit 26 for engaging the hook portion 25, to retain the base plate 11 around the glass tube 2.

In Embodiment 1, the winding-type spacer is shown in FIG. 8 that is mounted around the glass tube by winding and bonding the base plate therearound. The spacer according to Embodiment 6 is also a winding type spacer that is not formed into a ring shape in advance but directly wound around the glass tube 2 to be mounted, as with the spacer shown in FIG. 8. The spacer is fixed around the glass tube 2 only by threading the notch portion 22 through the engaging slit 23 or by threading the hook portion 25 through the hook engaging slit 26 and pulling the hook portion. This eliminates the bonding step, which is needed for the spacer having the configuration shown in FIG. 8, and simplifies the assembly steps, thus bringing about an effect of reducing assembly cost.

Embodiment 7

FIG. 18 is a development view showing a configuration of a spacer for the ozone generator, according to Embodiment 7 of the present invention. The spacer according to Embodiment 7 has a stress relaxation portion 28 in each end of the slit to relax a stress produced in the end portion of the slit. The spacers are mounted around the glass tube 2 before insertion thereof, and then the glass tube 2 is inserted inside the ground electrode tube 1. If the spacers are not fixed to the glass tube 2, the spacers slide on the glass tube 2, resulting in that the spacers cannot be assembled in predetermined positions. Hence, the shape of the slits and the number thereof need to be designed to generate a sufficient tensile force in the circumferential direction of the spacer. The base plate needs to be formed thin to establish the passage space of the source gas and to reduce the pressure

difference $\Delta Ps$. Forming the slit portions to generate the sufficient tensile force in the circumferential direction of the spacer produces a shearing stress at the slit ends if different forces are exerted, during insertion of the glass tube 2 or the like, on the portion between adjacent plate spring members of each base plate of the plurality of disposed spacers. If the shear stress exceeds the breaking stress, the base plate ruptures to become defective. The larger the curvature radius $R$ is formed in the slit end, the smaller the stress is produced at the end. For that reason, the slit end is formed into an arc shape having a curvature radius, and the arc portion is referred to as the stress relaxation portion 28. Employing this configuration reduces the rate of occurrence of defect of the spacer during insertion of the glass tube 2 and allows its yields to be improved, thus bringing about an effect of being able to reduce cost.

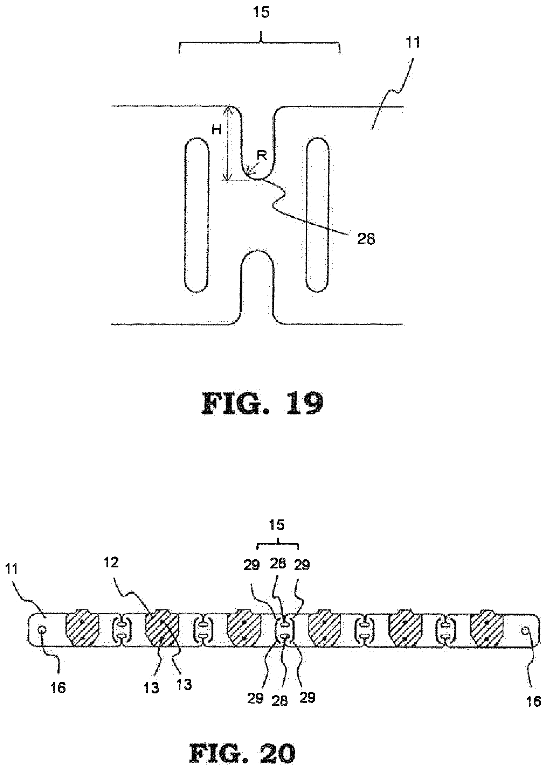

Experiments were conducted by varying the curvature radius $R$ and the cut length $H$ of the slit in the stress relaxation portion 28, which are illustrated in an enlarged view of FIG. 19 showing the configuration of the slit portion 15 of the base plate 11. The experimental result showed that rupture of the base plate is difficult to occur when a ratio $H / R$ is equal to or less than 20 and hardly occurs when the ratio $H / R$ is equal to or less than 6.

Embodiment 8

FIG. 20 is a development view showing a configuration of a spacer for the ozone generator, according to Embodiment 8 of the present invention. The spacer according to Embodiment 8 is formed to have elongation augmenting portions 29 for augmenting elongation of the slit portions 15. Elongation of the slit portions 15 fits and tightly retains the base plate 11 around the glass tube 2. The ends of each slit are inclined with respect to the axial direction of the glass tube 2 as shown in FIG. 20 and the inclined portions are referred to as the elongation augmenting portions 29 in Embodiment 8. Forming the elongation augmenting portions 29 in the slits slightly separate the slit portions 15 from the glass tube 2 and deform three-dimensionally when the spacer is wound around the glass tube 2. Thus, the elongation augmenting portion encourages the three-dimensional deformation and the elongation of each slit portion 15. With this configuration of the spacer, the base plate 11 has a large elongation potential and is capable of accommodating a wide range variation due to manufacturing error in the outer diameter of the glass tube 2, thus eliminating the need for preparing the base plates 11 having different lengths corresponding to the error in the outer diameter of the glass tube 2. As a result, variation in size of the base plates 11 can be reduced, thus bringing about an effect of being able to reduce manufacturing costs of the base plates.

It should be noted that each embodiment of the present invention may be appropriately combined, modified or omitted within the scope of the invention.

Numeral References

1: ground electrode tube;
2: glass tube (dielectric tube);
3: dielectric film;
4: high voltage, high frequency power source;
5: discharge space;
6: gas inlet;
7: gas outlet;
8: cooling water;
9: contact;
10: spacer;
11: base portion (base plate);
12: plate spring portions (plate spring members);
13: plate spring member welding spots;
14: base plate welding spot;
15: slit portions;
28: stress relaxation portions; and
29: elongation augmenting portion.

**Claims**

1. An ozone generator that is configured with a circular cross-section metal ground electrode tube (1) and a circular cross-section dielectric tube (2) provided with a metal electrode (3) inside the dielectric tube (2) and held inside the ground electrode tube (1) by a plurality of spacers (10), with a gap being established between the outer wall of the dielectric tube (2) and the inner wall of the ground electrode tube (1), to generate ozone by flowing a source gas through the gap and by applying an alternating voltage so that the ground electrode tube (1) has the ground potential and the metal electrode inside the dielectric tube (2) has a high potential, and by discharging the source gas flowing through the gap,
the ozone generator being **characterized in that** the plurality of spacers (10) are disposed at intervals in the axial direction of the dielectric tube (2), each of the plurality of disposed spacers (10) is made up of a base portion (11) formed of metal wound around the outer circumference of the dielectric tube (2) and of a plurality of plate spring portions (12) formed of metal each having a thickness thicker than the base portion (11) and fixed to the base portion (11), and both ends in the circumferential direction of the dielectric tube (2), of each of the plurality of plate spring portions (12) in contact with the inner wall of the ground electrode tube (1),
wherein each of the plate spring portions (12) has a portion whose width in the circumferential direction of the dielectric tube (2) increases continuously to a maximum circumferential width from at least one end in the axial direction of the dielectric tube (2).

**2.** The ozone generator of claim 1, wherein each of the plate spring portions (12) and the base portion (11) are respectively formed of different members, and the plate spring portions (12) are joined to the base portion (11).

**3.** The ozone generator of claim 1, wherein the plurality of plate spring portions (12) and the base portion (11) are formed of one metal plate.

**4.** The ozone generator of claim 3, wherein each of the plate spring portions (12) is disposed protruding in an axial direction of the dielectric tube (2) from the base portion.

**5.** The ozone generator of any one of claims 1 through 4, wherein the thickness of the base portion (11) is equal to or thinner than a quarter of distance of the gap.

**6.** The ozone generator of any one of claims 1 through 5, wherein the base portion (11) has, between adjacent plate spring portions (12) among the plurality of the plate spring portions (12), slit portions (15) in which a plurality of slits are extended in the axial direction of the dielectric tube (2).

**7.** The ozone generator of claim 6, wherein an end of each of the slits is formed into an arc shape.

**8.** The ozone generator of claim 6 or claim 7, wherein an end of each of the slits is formed inclined with respect to the axial direction of the dielectric tube (2).


**Patentansprüche**

**1.** Ozongenerator, der mit einem Erdungselektrodenrohr (1) aus Metall mit kreisförmigem Querschnitt und einem dielektrischen Rohr (2) mit kreisförmigem Querschnitt, das mit einer Metallelektrode (3) innerhalb des dielektrischen Rohrs (2) versehen ist und innerhalb des Erdungselektrodenrohrs (1) durch eine Mehrzahl von Abstandshaltern (10) gehalten ist, konfiguriert ist, wobei ein Spalt zwischen der Außenwand des dielektrischen Rohrs (2) und der Innenwand des Erdungselektrodenrohrs (1) gebildet ist, um Ozon zu erzeugen, indem ein Quellgas durch den Spalt strömt und eine Wechselspannung angelegt wird, so dass das Erdungselektrodenrohr (1) das Erdungspotential aufweist und die Metallelektrode innerhalb des dielektrischen Rohrs (2) ein hohes Potential aufweist, und indem das durch den Spalt strömende Quellgas entladen wird, wobei der Ozongenerator **dadurch gekennzeichnet ist, dass** die Mehrzahl von Abstandshaltern (10) in der axialen Richtung des dielektrischen Rohrs (2) in Intervallen angeordnet ist, jeder der Mehrzahl von angeordneten Abstandshaltern (10) aus einem Basisabschnitt (11), der aus Metall gebildet ist, das um den äußeren Umfang des dielektrischen Rohrs (2) gewickelt ist, und aus einer Mehrzahl von Blattfederabschnitten (12), die aus Metall gebildet sind, die jeweils eine Dicke haben, die dicker als der Basisabschnitt (11) ist, und die an dem Basisabschnitt (11) befestigt sind, zusammengesetzt ist, und beide Enden in der Umfangsrichtung des dielektrischen Rohrs (2), von jedem der Mehrzahl von Blattfederabschnitten (12) in Kontakt mit der Innenwand des Erdungselektrodenrohrs (1) sind, wobei jeder der Blattfederabschnitte (12) einen Abschnitt aufweist, dessen Breite in der Umfangsrichtung des dielektrischen Rohrs (2) von mindestens einem Ende in der axialen Richtung des dielektrischen Rohrs (2) kontinuierlich bis zu einer maximalen Umfangsbreite zunimmt.

**2.** Ozongenerator nach Anspruch 1, wobei jeder der Blattfederabschnitte (12) und der Basisabschnitt (11) jeweils aus unterschiedlichen Elementen gebildet sind und die Blattfederabschnitte (12) mit dem Basisabschnitt (11) verbunden sind.

**3.** Ozongenerator nach Anspruch 1, wobei die Mehrzahl der Blattfederabschnitte (12) und der Basisabschnitt (11) aus einer Metallplatte gebildet sind.

**4.** Ozongenerator nach Anspruch 3, wobei jeder der Blattfederabschnitte (12) derart angeordnet ist, dass er in einer axialen Richtung des dielektrischen Rohrs (2) aus dem Basisabschnitt herausragt.

**5.** Ozongenerator nach einem der Ansprüche 1 bis 4, wobei die Dicke des Basisabschnitts (11) gleich oder dünner als ein Viertel des Spaltabstandes ist.

**6.** Ozongenerator nach einem der Ansprüche 1 bis 5, wobei der Basisabschnitt (11) zwischen benachbarten Blattfederabschnitten (12) aus der Mehrzahl der Blattfederabschnitte (12) Schlitzabschnitte (15) aufweist, in denen sich eine Mehrzahl von Schlitzen in axialer Richtung des dielektrischen Rohrs (2) erstreckt.

**7.** Ozongenerator nach Anspruch 6, bei dem ein Ende jedes der Schlitze zu einer Bogenform geformt ist.

**8.** Ozongenerator nach Anspruch 6 oder 7, bei dem ein Ende jedes der Schlitze in Bezug auf die axiale Richtung des dielektrischen Rohrs (2) geneigt ausgebildet ist.


**Revendications**

**1.** Générateur d'ozone qui est configuré avec un tube d'électrode de masse métallique (1) de section circulaire et un tube diélectrique (2) de section circulaire muni d'une électrode métallique (3) à l'intérieur du tube diélectrique (2) et maintenu à l'intérieur du tube d'électrode de masse (1) par une pluralité d'éléments d'espacement (10), un espace étant établi entre la paroi extérieure du tube diélectrique (2) et la paroi intérieure du tube d'électrode de masse (1), pour générer de l'ozone en faisant circuler un gaz source à travers l'espace et en appliquant une tension alternative de sorte que le tube d'électrode de masse (1) ait le potentiel de masse et que l'électrode métallique à l'intérieur du tube diélectrique (2) ait un potentiel élevé, et en déchargeant le gaz source circulant à travers l'espace,
le générateur d'ozone étant **caractérisé en ce que** la pluralité d'éléments d'espacement (10) sont disposés à des intervalles dans la direction axiale du tube diélectrique (2), chacun de la pluralité d'éléments d'espacement (10) disposés est constitué d'une partie de base (11) formée de métal enroulé autour de la circonférence extérieure du tube diélectrique (2) et d'une pluralité de parties formant ressort à lames (12) formées de métal ayant chacune une épaisseur supérieure à la partie de base (11) et fixées à la partie de base (11), et les deux extrémités dans la direction circonférentielle du tube diélectrique (2), de chacune de la pluralité de parties formant ressort à lames (12) sont en contact avec la paroi intérieure du tube d'électrode de masse (1), chacune des parties formant ressort à lames (12) ayant une partie dont la largeur dans la direction circonférentielle du tube diélectrique (2) augmente de façon continue jusqu'à une largeur circonférentielle maximale à partir d'au moins une extrémité dans la direction axiale du tube diélectrique (2).

2. Générateur d'ozone selon la revendication 1, chacune des parties formant ressort à lames (12) et la partie de base (11) étant respectivement formées de différents éléments, et les parties formant ressort à lames (12) étant jointes à la partie de base (11).

3. Générateur d'ozone selon la revendication 1, la pluralité de parties formant ressort à lames (12) et la partie de base (11) étant formées d'une seule plaque métallique.

4. Générateur d'ozone selon la revendication 3, chacune des parties formant ressort à lames (12) étant disposée en saillie dans une direction axiale du tube diélectrique (2) à partir de la partie de base.

5. Générateur d'ozone selon l'une quelconque des revendications 1 à 4, l'épaisseur de la partie de base (11) étant égale ou inférieure à un quart de la distance de l'espace.

6. Générateur d'ozone selon l'une quelconque des revendications 1 à 5, la partie de base (11) ayant, entre des parties formant ressort à lames (12) adjacentes parmi la pluralité des parties formant ressort à lames (12), des parties de fente (15) dans lesquelles une pluralité de fentes s'étendent dans la direction axiale du tube diélectrique (2).

7. Générateur d'ozone selon la revendication 6, une extrémité de chacune des fentes étant formée en forme d'arc.

8. Générateur d'ozone selon la revendication 6 ou la revendication 7, une extrémité de chacune des fentes étant formée de manière inclinée par rapport à la direction axiale du tube diélectrique (2).

FIG. 1

# FIG. 2

FIG. 3

EP 3 401 274 B1

**FIG. 4A**

**FIG. 4B**

FIG. 5

FIG. 6

FIG. 7

FIG. 8

FIG. 9

**FIG. 10**

FIG. 11A

FIG. 11B

EP 3 401 274 B1

**FIG. 12**

**FIG. 13**

**FIG. 14**

**FIG. 15**

**FIG. 16**

**FIG. 17**

**FIG. 18**

**FIG. 19**

**FIG. 20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000203808 A
- JP 2008013404 A
- JP 2005179102 A
- JP 2013252985 A
- JP H04214003 A
- FR 2424874 A1
- US 5254317 A
- JP H1143311 A